# EUROPEAN PATENT APPLICATION

(11) **EP 4 635 759 A1**
(43) Date of publication of application: **22.10.2025**
(21) Application number: 24170969.0
(22) Date of filing: 18.04.2024
(51) Int. Cl.: B60G 7/00, F16C 7/02, F16C 11/06, F16C 11/08, F16C 27/06

(54) **PIN BUSH AND A SUSPENSION SYSTEM COMPRISING THE PIN BUSH**

(71) Applicant: VOLVO TRUCK CORPORATION, 405 08 Göteborg (SE)
(72) Inventor: SATHIYAMURTHY, Mohana Prasad, 560093 Bangalore (IN)
(74) Representative: Kransell & Wennborg KB

(57) **Abstract**

The present disclosure relates to a pin bush (1) for connecting linkages (100), comprising:
- a spheroid member (2),
- a metal pin (3) for connecting the pin bush to a linkage, the metal pin extending through the spheroid member forming together a spheroid pin member (4),
- a metal sleeve (5) enclosing the spheroid pin member, and
- a rubber lining (6) arranged between the metal sleeve and the spheroid pin member, the rubber lining being configured to reduce vibrational energy transfer between the metal sleeve and the spheroid pin member, wherein the spheroid member is a plastic member.

## Description

### TECHNICAL FIELD

The disclosure relates generally to pin bushes, a suspension system comprising one or more pin bushes, or components of a suspension system, comprising such pin bush. In particular aspects, the disclosure relates to a pin bush with a plastic inner member to reduce weight and a suspension system, or components of a suspension system, comprising such pin bush. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Vehicles and their suspension systems are continuously developed to meet demands from the market and to adapt the vehicles to changes in the propulsion system. A particular aspect relates to the emission of environmentally harmful exhaust gas. Therefore, vehicles propelled by electric traction motors have been increasingly popular, both for cars as well as for trucks and other heavy duty vehicles..

Due to the transition to electrical traction motors, the battery packs increase the unladen weight of the vehicles, which in turn lead to less payload capacity.

One demand is to provide weight reduction since high vehicle weight entails lower fuel efficiency, lower payload, higher emission and higher production cost.

### SUMMARY

According to a first aspect of the disclosure, a pin bush for connecting linkages is provided, the pin bush comprising:
- a spheroid member,
- a metal pin for connecting the pin bush to a linkage, the metal pin extending through the spheroid member forming together a spheroid pin member,
- a metal sleeve enclosing the spheroid pin member, and
- a rubber lining arranged between the metal sleeve and the spheroid pin member,
- the rubber lining being configured to reduce vibrational energy transfer between the metal sleeve and the spheroid pin member, wherein the spheroid member is a plastic member.

The first aspect of the disclosure may seek to provide weight reduction for the suspension systems of vehicles. A technical benefit may include an increased fuel efficiency, higher payload and reduced emission. This is of particular benefit for electrical vehicles, due to the increased unladen weight provided by the battery packs.

One of the heavier systems in for example trucks is the suspension systems. The weight of suspension control arm bushes is generally high and a major contribution to the weight is bush inner metal. Suspension system uses many linkages. Each linkage will have bushes. Hence, by reducing the weight of pin bushes a real contribution to reducing the weight of the suspension systems and vehicles comprising the suspension systems may be provided.

Optionally in some examples, including in at least one preferred example the pin bush is configured to connect suspension links of a vehicle. A technical benefit may include reduced weight of a suspension system which generally is one of the heavier systems of a vehicle.

Optionally in some examples, including in at least one preferred example, the metal pin protrudes out from the pin bush on opposing sides of the pin bush forming a first and a second link arm. A technical benefit may include that the first and second link arms enable connection between linkages in the suspension system and a vehicle.

The protruding sections of the metal pin forming the first and second link arm may be provided with a respective through hole, such as for connecting the linkages with a vehicle by means of bolts or the like.

Optionally in some examples, including in at least one preferred example, the spheroid member is a solid plastic spheroid member. A technical benefit may include that the metal volume of the pin bush may be reduced while maintaining a sufficient resistance against compressive forces.

Optionally in some examples, including in at least one preferred example, the plastic in the spheroid member has a density within the range of from 0.80 to 1.6 g/cm³, preferably within the range of from 0.87 to 1.6 g/cm³, more preferably 1.2 to 1.6 g/cm³. A technical benefit may include that the compressive strength of the spheroid member may be enhanced.

Optionally in some examples, including in at least one preferred example, the plastic in the spheroid member has a compressive strength within the range of from 120 to 200 MPa, as measured according to the standard method ASTM D1621. The compressive strength properties as defined herein may assist to withstand radial compressive forces and torsional forces acting on the bush during vehicle motion. A technical benefit may include a reduced weight while maintaining physical properties suitable for pin bushings.

Optionally in some examples, including in at least one preferred example, the plastic in the spheroid member has a compressive strength within the range of from 130 to 180 MPa, as measured according to the standard method ASTM D1621. A technical benefit may include a reduced weight while maintaining advantageous physical properties suitable for pin bushings.

Optionally in some examples, including in at least one preferred example, the plastic in the spheroid member has a compressive strength within the range of from 140 to 160 MPa, as measured according to the standard method ASTM D1621. A technical benefit may include a reduced weight while maintaining advantageous physical properties suitable for pin bushings.

Optionally in some examples, including in at least one preferred example, the plastic in the spheroid member has a yield strength within the range of from 110 to 170 MPa, as measured according to the standard method ISO 527. Such yield strength property may assist to withstand axial forces, elongation radial forces and torsional forces acting on the bush during vehicle motion. A technical benefit may thus include a reduced weight while maintaining advantageous physical properties suitable for pin bushings.

Optionally in some examples, including in at least one preferred example, the spheroid member comprises polyamide or polypropylene. Polyamide or polypropylene may provide beneficial compressive resistance and yield strength for the spheroid plastic member. More particularly, polyamide may provide beneficial compressive resistance and yield strength for the spheroid plastic member.

Optionally in some examples, including in at least one preferred example, a major component of the spheroid member is polyamide or polypropylene, i.e. more than 50 wt.% of the spheroid member may constitute of polyamide or polypropylene.

Optionally in some examples, including in at least one preferred example, the spheroid member comprises nylon. Optionally, a major component of the spheroid member is nylon. Nylon may provide particularly beneficial compressive resistance and yield strength for the spheroid plastic member and resists well to wear and tear.

Optionally in some examples, including in at least one preferred example, the spheroid member comprises Nylon 66. Optionally, a major component of the spheroid member is Nylon 66. Nylon 66 has been found to provide particularly beneficial compressive resistance and yield strength for the spheroid plastic member.

Optionally in some examples, including in at least one preferred example, the spheroid member comprises Nylon 66-GF. Nylon 66-GF is glass-fibre reinforced nylon 66 having high abrasion and temperature resistance and may be particularly advantageous for use in the spheroid plastic member.

Optionally in some examples, including in at least one preferred example, the spheroid member is made of a plastic composite material. A plastic composite material is plastic material strengthened with fibers, fillers, particulates, powders and other matrix reinforcements to provide improved strength and/or stiffness. A technical benefit may thus include that plastic composite material may provide both reduced weight and beneficial physical properties such as improved strength.

Optionally in some examples, including in at least one preferred example, the spheroid member is made of fibre-reinforced plastic, preferably glassfibre reinforced plastic. A technical benefit may thus include that fibre-reinforced plastic and preferably glassfibre reinforced plastic, may provide both reduced weight and particularly beneficial physical properties such as improved strength, stiffness and creep and a high heat resistance.

Optionally in some examples, including in at least one preferred example, the spheroid member has a spherical or ellipsoid shape. A technical benefit may include that a substantial part of the pin bush is replaced with a plastic material while maintaining general physical requirements of pin bushing.

Optionally in some examples, including in at least one preferred example, the metal sleeve is a tubular metal sleeve. A technical benefit may include that the outer cover of the pin bush provide strength, wear resistance by covering the entire bush and attaches bush with linkages by interference fit.

Optionally in some examples, including in at least one preferred example, the metal pin extends along a center axis of the spheroid member.

According to a second aspect of the disclosure, a Reaction Rod comprising a pin bush according the first aspect is provided. The second aspect of the disclosure may seek to provide weight reduction for the suspension systems of vehicles. Reaction Rods are linkages generally used in suspension systems for vehicle and providing a weight reduction for the Reaction Rods used in a suspension system in a vehicle entails general weight reduction for the vehicle. Reaction Rods are used in vehicles to keep the position of the axle during vehicle driving, braking and to withstand driving and braking loads.

According to a third aspect of the disclosure, a V-Stay linkage comprising a pin bush according the first aspect is provided. The third aspect of the disclosure may seek to provide weight reduction for the suspension systems of vehicles. V-Stay linkages are linkages generally used in suspension systems for vehicle and providing a weight reduction for the V-Stay linkage used in a suspension system in a vehicle entails general weight reduction for the vehicle. V-Stay linkages are used in vehicles to keep the position of the axle during cornering, braking and to withstand cornering and braking loads.

According to a fourth aspect of the disclosure, a Cross-Stay linkage comprising a pin bush according the first aspect is provided. The fourth aspect of the disclosure may seek to provide weight reduction for the suspension systems of vehicles. Cross-Stay linkages are linkages generally used in suspension systems for vehicle and providing a weight reduction for the Cross-Stay linkage used in a suspension system in a vehicle entails general weight reduction for the vehicle. Cross-Stay linkages are used in vehicles to keep the position of the axle during cornering and to withstand cornering loads.

According to a fifth aspect of the disclosure, a suspension system comprising one or more of the pin bushes according to the first aspect, the Reaction Rod according to the second aspect, the V-Stay linkage according to the third aspect or the Cross-Stay linkage according to the fourth aspect, is provided. The fifth aspect of the disclosure may seek to provide weight reduction for the suspension systems of vehicles. Suspension systems are generally one of the heavier systems in for example trucks. The weight of suspension control arm bushes is generally high and a major contribution to the weight is bush inner metal. Suspension system uses many linkages. Each linkage will have bushes. Hence, by reducing the weight of pin bushes a real contribution to reducing the weight of the suspension systems and vehicles comprising the suspension systems may be provided.

The suspension system may be a rear and/or front suspension system of a vehicle.

According to a sixth aspect of the disclosure, a vehicle comprising one or more of the pin bushes according to the first aspect, the Reaction Rod according to the second aspect, the V-Stay linkage according to the third aspect, the Cross-Stay linkage according to the fourth aspect or the suspension system according to the fifth, is provided. The sixth aspect of the disclosure may seek to reduce the weight of a frequently used component of the vehicle and thereby provide a significant overall weight reduction for the vehicle. A technical benefit may include an increased fuel efficiency, higher payload and reduced emission.

According to a seventh aspect of the disclosure, a method of forming a pin bush for connecting linkages is provided, the method comprising:
- providing a spheroid member made of a plastic material;
- providing a metal pin;
- pressing the metal pin into a through hole of the spheroid member;
- providing the spheroid member comprising the metal pin with a rubber lining; and
- providing an outer metal sleeve onto the rubber lining.

The seventh aspect of the disclosure may seek to provide a method for producing a pin bush with a reduced weight.

According to an eighth aspect of the disclosure, a method of forming a pin bush for connecting linkages is provided, the method comprising:
- providing a spheroid member made of a plastic material;
- providing a metal pin;
- molding a spheroid member from a plastic material around the metal pin such that the metal pin extends through the molded spheroid member;
- providing the spheroid member comprising the metal pin with a rubber lining; and
- providing an outer metal sleeve onto the rubber lining.

The eighth aspect of the disclosure may seek to provide an alternative method for producing a pin bush with a reduced weight.

In the method according to the seventh and or eighth aspects, the pin bush may be a pin bush according to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary vehicle according to an example,
Figs. 2A-2D illustrate an exemplary pin push according to an example,
Fig. 3A is an exemplary Reaction Rod comprising a pin bush according to an example,
Fig. 3B is an exemplary V-Stay linkage comprising a pin bush according to an example,
Fig. 3C is an exemplary Cross-Stay linkage comprising a pin bush according to an example,
Fig. 4 is a flow chart of an exemplary method of forming a pin bush for connecting linkages according to an example, and
Fig. 5 is a flow chart of an exemplary method of forming a pin bush for connecting linkages according to an alternative example.

### DETAILED DESCRIPTION

The detailed description set forth below provides information and examples of the disclosed technology with sufficient detail to enable those skilled in the art to practice the disclosure.

The following disclosure aims at providing weight reduction vehicles, and more particularly for the suspension systems of vehicles. One of the heavier systems in for example trucks is the suspension systems. The weight of suspension control arm bushes is generally high and a major contribution to the weight is bush inner metal. Suspension system uses many linkages. Each linkage will have bushes. Hence, by reducing the weight of pin bushes a real contribution to reducing the weight of the suspension systems and vehicles comprising the suspension systems may be provided. A technical benefit may include an increased fuel efficiency, higher payload and reduced emission. This is of particular benefit for electrical vehicles, due to the increased unladen weight provided by the battery packs reducing weight.

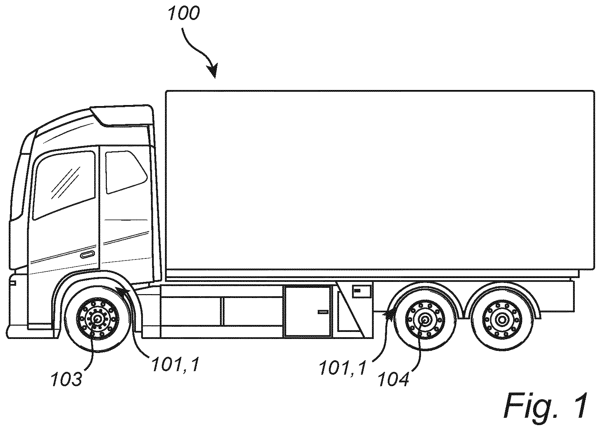

Turning to Fig. 1, which is an exemplary illustration of a vehicle 100 according to an example. The vehicle 100 comprises a front suspension system 101 and a rear suspension system 102, the front suspension system 101 connecting the front axle 103 to the frame of the vehicle 100 and the rear suspension system connecting the rear axle 104 to the frame of the vehicle. The suspension systems 101, 102 of the vehicle each comprises a plurality of linkages which are bars and brackets supporting the axles and other components such as springs and shock absorbers of the suspension systems 101, 102. Each of the linkages comprises pin bushes 1 for connecting the linkages to other components of the suspension system 101, 102.

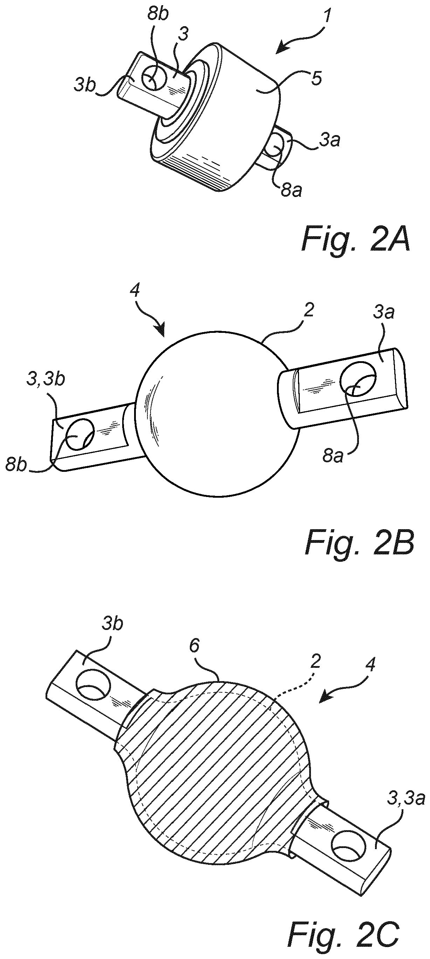

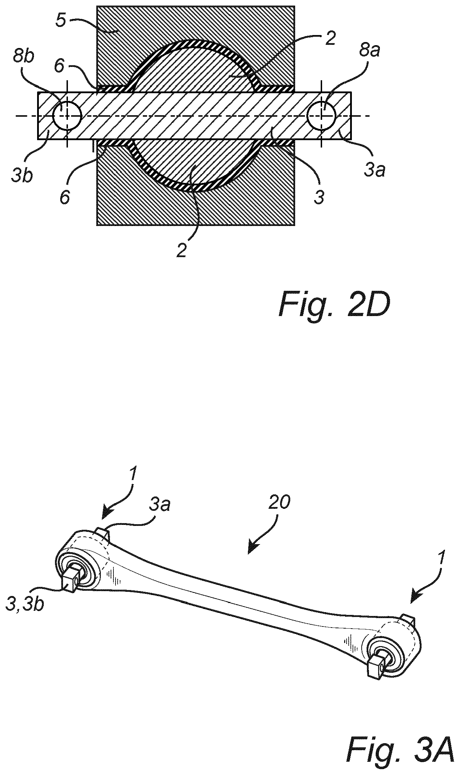

Figs. 2A - 2D illustrate a pin bush 1 according to the present disclosure. Fig. 2A is a perspective view of the pin bush 1 and Fig. 2D is a cross-sectional view of the pin bush shown in Fig. 2A. The pin bush 1 comprises a spheroid member 2 and a metal pin 3 extending through the spheroid member 2, shown in Figs. 2B - 2D. The metal pin 3 and the spheroid member 2 forms together a spheroid pin member 4, shown in Fig. 2C. The pin bush 1 furthermore comprises a metal sleeve 5 enclosing the spheroid pin member 4, shown in Figs. 2A and 2D and providing the pin bush 1 with a cylindrical shape. The pin bush 1 furthermore comprises a rubber lining 6 arranged between the metal sleeve 5 and the spheroid pin member 4 for reducing vibrational energy transfer between the spheroid pin member 4 and the metal sleeve 5.

Fig. 2B is a partial view of the pin bush 1, wherein the rubber lining 6 and the metal sleeve 5 has been removed to visualize the metal pin 3 and the spheroid member 2. In a similar type of view, Fig. 2C illustrates the pin bush 1 with the metal pin 3, the spheroid member 2 and the rubber lining 6 but with the metal sleeve 5 removed.

The metal pin 3 extends along a center axis of the spheroid member 2 and protrudes out from the pin bush 1 on opposing sides of the pin bush 1 forming a first and a second link arm 3a,3b. In the exemplified illustration provided in Figs.2A-2D, the first and a second link arm 3a,3b are provided with a respective through hole 8a,8b, such as for connecting the linkages with a vehicle by means of bolts or the like

The spheroid member 2 is a plastic spheroid member and may be a solid plastic member, optionally constituted by a polypropylene or a polyamide, preferably a polyamide, such as nylon. By "solid" is meant that the spheroid member is not hollow or semi-hollow, except for the hollow space occupied by the metal pin.

The spheroid member 2 may be a plastic composite material, such as a fibre-reinforced plastic. The fibre-reinforced plastic may be a glass-fiber reinforced plastics. Optionally, a fibre-reinforced polyamide or nylon, such as Nylon 66-GF which is a glass-fibre reinforced nylon.

The rubber lining 6 may be a tubular lining arranged over the spheroid member 2 and extending out onto a section of the metal pin 2 on a respective side of the spheroid member 2 such that the rubber lining 6 is arranged between the metal sleeve 5 and the spheroid member 2 and between the metal sleeve 5 and the metal pin 2 to separate the surfaces of the two metal parts and the plastic spheroid member 2 and the metal sleeve 5, which may be seen in Fig. 2D.

In the Figs. 2A-2C, the spheroid member 2 has a spherical shape. However, the spheroid member may alternatively have an ellipsoid shape.

Fig. 3A is an exemplary Reaction Rod 20 comprising a pin bush 1 as illustrated in Figs. 2A-2D. Reaction Rods are used in vehicles to keep the position of the axle during vehicle driving, braking and to withstand driving and braking loads. The metal pin 3 for connecting the pin bush 1 and the Reaction Rod 20 to a vehicle extends through the pin bush 1 and forming a first and a second link arm 3a,3b.

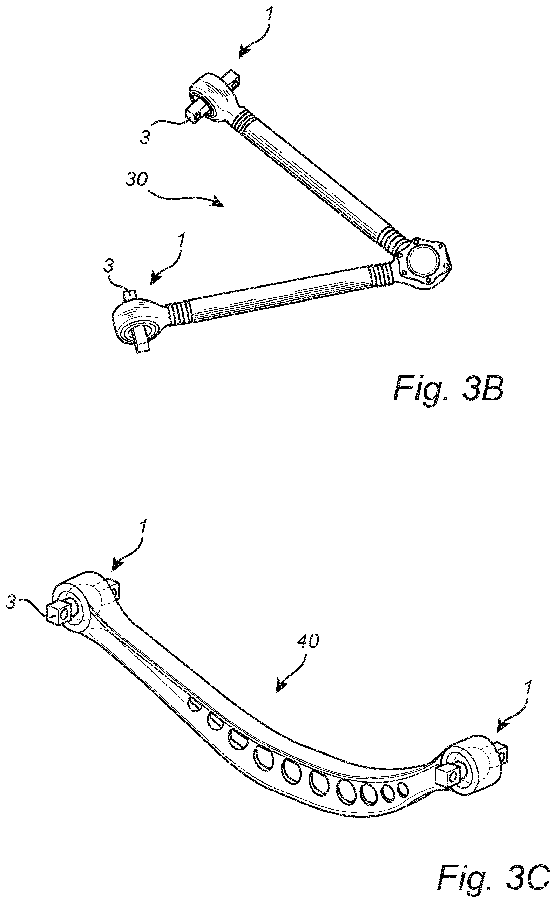

Fig. 3B is an exemplary V-Stay linkage 30 comprising a pin bush 1 as illustrated in Figs. 2A - 2D for connecting the V-Stay linkage 30 of a suspension system to a vehicle. V-Stay linkages are used in vehicles to keep the position of the axle during cornering, braking and to withstand cornering and braking load.

Fig. 3C is an exemplary Cross-Stay linkage 40 comprising a pin bush 1 as illustrated in Figs. 2A-2D and for connecting the Cross-Stay linkage 40 of a suspension system to a vehicle. Cross-Stay linkages are used in vehicles to keep the position of the axle during cornering and to withstand cornering loads.

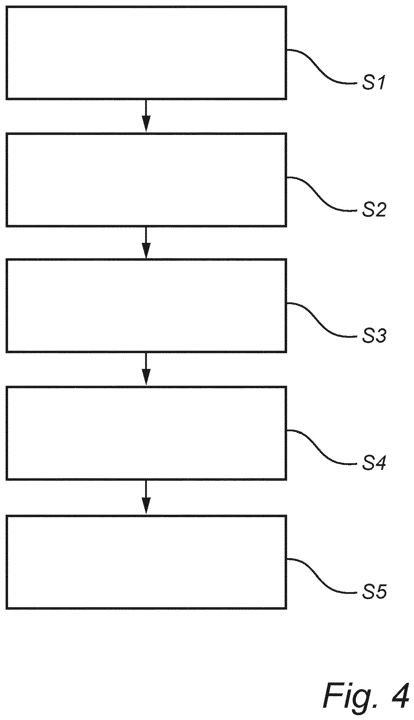

Fig. 4 is an exemplary flow chart of a method of forming a pin bush 1, reference is made to Figs. 2A - 2D, for connecting linkages 20, 30, 40, reference is made to Figs. 3A-3C, comprising:
S1 - providing a spheroid member 2 made of a plastic material;
S2 - providing a metal pin 3;
S3 - pressing the metal pin 3 into a through hole of the spheroid member 2;
S4 - providing the spheroid member 2 comprising the metal pin 3 with a rubber lining 6; and
S5 - providing an outer metal sleeve 5 onto the rubber lining 6.

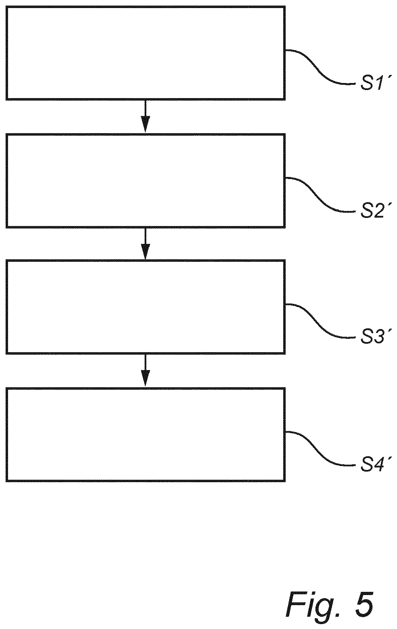

Fig. 5 is an exemplary flow chart of an alternative method of forming a pin bush 1, see Figs. 2A - 2D, for connecting linkages 20, 30, 40, see Figs. 3A - 3C, comprising:
S1' - providing a metal pin 3;
S2' - molding a spheroid member 2 from a plastic material around the metal pin 3 such that the metal pin extends through the molded spheroid member 2;
S3' - providing the spheroid member 2 comprising the metal pin 3 with a rubber lining 6; and
S4' - providing an outer metal sleeve 5 onto the rubber lining 6.

The pin bush 1 formed in the method as illustrated in Fig. 4 or Fig. 5 may be a pin bush 1 as illustrated in any of Figs. 2A-2D.

Like reference number denote similar features throughout the figures. Reference numbers may be omitted in some figures for better visibility, in which case reference is made to the other figures.

### EXAMPLE LIST

Example 1: A pin bush for connecting linkages, comprising:
- a spheroid member,
- a metal pin for connecting the pin bush to a linkage, the metal pin extending through the spheroid member forming together a spheroid pin member,
- a metal sleeve enclosing the spheroid pin member, and
- a rubber lining arranged between the metal sleeve and the spheroid pin member,
- the rubber lining being configured to reduce vibrational energy transfer between the metal sleeve and the spheroid pin member, wherein the spheroid member is a plastic member.

Example 2: The pin bush of example 1, wherein the pin bush is configured to connect suspension links of a vehicle.

Example 3: The pin bush of any of examples 1-2, wherein the metal pin protrudes out from the pin bush on opposing sides of the pin bush forming a first and a second link arm.

Example 4: The pin bush of any of examples 1-3, wherein the spheroid member is a solid plastic spheroid member.

Example 5: The pin bush of any of the preceding examples, wherein the plastic in the spheroid member has a density within the range of from 0.80 to 1.6 g/cm³ preferably within the range of from 0.87 to 1.6 g/cm³, more preferably 1.2 to 1.6 g/cm³.

Example 6: The pin bush of any of the preceding examples, wherein the plastic in the spheroid member has a compressive strength within the range of from 120 to 200 MPa, preferably within the range of from 130 to 180 MPa, more preferably within the range of from 140 to 160 MPa, as measured according to the standard method ASTM D1621.

Example 7: The pin bush of any of the preceding examples, wherein the spheroid member comprises polyamide or polypropylene.

Example 8: The pin bush of any of examples 1-6, wherein the spheroid member comprises nylon, preferably Nylon 66.

Example 9: The pin bush of any of the preceding examples, wherein the spheroid member is made of a plastic composite material.

Example 10: The pin bush of any of examples 1-8, wherein the spheroid member is made of fibre-reinforced plastic, preferably glass fibre reinforced plastic.

Example 11: The pin bush of any of the preceding examples, wherein the spheroid member has a spherical or ellipsoid shape.

Example 12: The pin bush of any of the preceding examples, wherein the metal sleeve is a tubular metal sleeve.

Example 13: The pin bush of any of the preceding examples, wherein the metal pin extends along a center axis of the spheroid member.

Example 14: A Reaction Rod comprising a pin bush according to any one of the preceding examples.

Example 15: A V-Stay linkage comprising a pin bush according to any one of examples 1-13.

Example 16: A Cross-Stay linkage comprising a pin bush according to any one of examples 1-13.

Example 17: A suspension system comprising one or more of the pin bushes according to any one of the preceding examples, the Reaction Rod according to example 14, the V-Stay linkage according to example 15 or the Cross-Stay linkage according to example 16.

Example 18 A vehicle comprising one or more of the pin bushes according to any of examples 1-13, the Reaction Rod according to example 14, the V-Stay linkage according to example 15, the Cross-Stay linkage according to example 16 or the suspension system according to example 17.

Example 19: A method of forming a pin bush for connecting linkages, comprising
- providing a spheroid member made of a plastic material;
- providing a metal pin;
- pressing the metal pin into a through hole of the spheroid member;
- providing the spheroid member comprising the metal pin with a rubber lining; and
- providing an outer metal sleeve onto the rubber lining.

Example 20: A method of forming a pin bush for connecting linkages, comprising
- providing a metal pin;
- molding a spheroid member from a plastic material around the metal pin such that the metal pin extends through the molded spheroid member;
- providing the spheroid member comprising the metal pin with a rubber lining; and
- providing an outer metal sleeve onto the rubber lining.

Example 21: The method of example 19 or 20, wherein the pin bush is a pin bush according to any one of examples 1 to 13.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

**1.** A pin bush (1) for connecting linkages (100), comprising:
- a spheroid member (2),
- a metal pin (3) for connecting the pin bush to a linkage, the metal pin extending through the spheroid member forming together a spheroid pin member (4),
- a metal sleeve (5) enclosing the spheroid pin member, and
- a rubber lining (6) arranged between the metal sleeve and the spheroid pin member, the rubber lining being configured to reduce vibrational energy transfer between the metal sleeve and the spheroid pin member, wherein the spheroid member is a plastic member.

**2.** The pin bush of claim 1, wherein the pin bush is configured to connect suspension links of a vehicle.

**3.** The pin bush of any of claims 1-2, wherein the metal pin protrudes out from the pin bush on opposing sides of the pin bush forming a first and a second link arm (3a,3b).

**4.** The pin bush of any of claims 1-3, wherein the spheroid member is a solid plastic spheroid member.

**5.** The pin bush of any of the preceding claims, wherein the plastic in the spheroid member has a density within the range of from 0.80 to 1.6 g/cm³.

**6.** The pin bush of any of the preceding claims, wherein the plastic in the spheroid member has a compressive strength within the range of from 120 to 200 MPa, as measured according to the standard method ASTM D1621.

**7.** The pin bush of any of the preceding claims, wherein the spheroid member comprises polyamide or polypropylene.

**8.** The pin bush of any of the preceding claims, wherein the spheroid member is made of a plastic composite material.

**9.** The pin bush of any of claims 1-8, wherein the spheroid member is made of fibre-reinforced plastic.

**11.** The pin bush of any of the preceding claims, wherein the spheroid member has a spherical or ellipsoid shape.

**12.** A suspension system (101,102) comprising one or more of the pin bushes (1) according to any one of the preceding claims.

**13.** A vehicle (100) comprising one or more of the pin bushes according to any of claims 1-11 or the suspension system according to claim 12.

**14.** A method of forming a pin bush for connecting linkages, comprising
- providing a spheroid member made of a plastic material;
- providing a metal pin;
- pressing the metal pin into a through hole of the spheroid member;
- providing the spheroid member comprising the metal pin with a rubber lining; and
- providing an outer metal sleeve onto the rubber lining.

**15.** A method of forming a pin bush for connecting linkages, comprising
- providing a metal pin;
- molding a spheroid member from a plastic material around the metal pin such that the metal pin extends through the molded spheroid member;
- providing the spheroid member comprising the metal pin with a rubber lining; and
- providing an outer metal sleeve onto the rubber lining.
